# EUROPEAN PATENT APPLICATION

(11) **EP 4 722 057 A1**
(43) Date of publication of application: **08.04.2026**
(21) Application number: 24815035.1
(22) Date of filing: 23.04.2024
(51) Int. Cl.: B60W 10/04, B60W 10/20, B60L 15/20, B60W 10/08

(54) **VEHICLE CONTROL DEVICE AND CONTROL METHOD**

(30) Priority: 31.05.2023 JP 2023090024
(71) Applicant: THK CO., LTD., Minato-ku Tokyo 108-8506 (JP)
(72) Inventor: NISHIDE Tetsuhiro, Tokyo 108-8506 (JP); KANESHIGE Hiroshi, Tokyo 108-8506 (JP); MINAMI Toshiro, Tokyo 108-8506 (JP); KAMADA Shinobu, Tokyo 108-8506 (JP); SOGA Arina, Tokyo 108-8506 (JP); YANAGIDA Hidekuni, Tokyo 108-8506 (JP)
(74) Representative: Prinz & Partner mbB
(86) International application number: PCT/JP2024/015846
(87) International publication number: WO 2024/247549

(57) **Abstract**

There is provided a control apparatus and a control method for a vehicle that can control the steering angle of rear wheels and the driving torque of in-wheel motors mounted on the rear wheels according to the motion state of a vehicle and the operation state of a driver, and can independently control the yaw rate and the crosswise acceleration that are generated in the vehicle. A control apparatus for a vehicle includes a steering mechanism that steers rear wheels of the vehicle, and in-wheel motors that drive the rear wheels, the control apparatus including an operation state detection device that detects an operation state by a driver, a motion state detection device that detects a motion state of the vehicle, and a wheel control device that controls the steering mechanism and the in-wheel motors based on a signal detected by the operation state detection device and a signal detected by the motion state detection device.

## Description

### TECHNICAL FIELD

The present invention relates to a control apparatus and a control method for a vehicle.

### BACKGROUND ART

Conventionally, for vehicles in which the steering angles of front and rear wheels can be controlled in response to the steering by a driver, a vehicle is known that includes a steering device that detects the vehicle's motion state, and applies auxiliary steering angles to the front and rear wheels according to a target yaw rate. Although various structures are known for such a vehicle steering device, for example, as illustrated in Patent Literature 1, for steering devices including a rear wheel steering actuator that drives a rear wheel steering mechanism, and a steering control device that drives and controls a front wheel steering actuator and the rear wheel steering actuator based on a target yaw rate and a target crosswise velocity, a steering device is known that includes a failure determination device that detects whether or not the front wheel steering actuator has failed, a target yaw rate characteristic changing device that changes, when the front wheel steering actuator has failed, the characteristics of the target yaw rate based on a rate of change in a steering gear ratio before and after the failure, and a failure time steering control device that drives and controls the rear wheel steering actuator based on the changed characteristic of the target yaw rate.

According to such a steering device, even if a defect occurs in the front wheel steering actuator, since the characteristics of the target yaw rate are changed based on the rate of change in the steering gear ratio before and after the failure of the front wheel steering actuator, and the rear wheel steering actuator is driven and controlled based on the changed characteristics of the target yaw rate, the stability in vehicle behavior can be ensured.

### CITATION LIST

### Patent Literature

Patent Literature 1: Japanese Patent Laid-Open No. 2006-69497

### SUMMARY Of INVENTION

### PROBLEMS TO BE SOLVED BY THE INVENTION

Generally, a vehicle including a steering device for front and rear wheels can control the yaw rate that is generated in the vehicle at the time of turning, when the rear wheels are steered in the opposite direction to the steering direction of the front wheels. It should be noted that, in this description, the state in which the rear wheels are steered in the opposite direction to the steering direction of the front wheels is defined as anti-phase.

On the other hand, since the crosswise acceleration that is generated in a vehicle at the time of turning is uniquely determined by the value of the yaw rate, there is a risk that the vehicle assumes in a motion state different from the driver's intention, causing discomfort to the driver during driving.

In addition, when the rear wheels are steered in the same direction as the front wheels, it becomes possible to control the crosswise acceleration that is generated in the vehicle, but even in this case, since the yaw rate is uniquely determined by the value of the crosswise acceleration, there is a problem similar to the above-described problem. It should be noted that, in this description, the state in which the rear wheels are steered in the same direction as the front wheels is defined as in-phase.

In addition, conventionally, as one type of electric vehicles, a so-called in-wheel motor type vehicle is known in which a motor is arranged inside or near a wheel of the vehicle, and the wheel is directly driven by the motor. In such an in-wheel motor type vehicle, the motor provided for each wheel can be individually rotated and controlled. Accordingly, by individually controlling each motor, it is possible to appropriately control the driving torque applied to each wheel according to the vehicle's motion state.

According to the in-wheel motor type vehicle, by increasing the driving torque of the wheels on the opposite side of the turning direction at the time of turning, the vehicle itself can be caused to generate a turning force, which is so-called torque vectoring. That is, by controlling the distribution of driving torque between the left and right wheels, the value of the yaw rate generated in the vehicle can be controlled. However, even in such an in-wheel motor type vehicle, since the crosswise acceleration generated in the vehicle at the time of turning is uniquely determined by the value of the yaw rate, there is a problem similar to the above-described problem.

The present invention has been made to solve the above-described problems, and an object of the present invention is to provide a control apparatus and a control method for a vehicle that can control the steering angle of rear wheels and the driving torque of in-wheel motors mounted on the rear wheels according to the motion state of a vehicle and the operation state of a driver, and can independently control the yaw rate and the crosswise acceleration that are generated in the vehicle.

### MEANS FOR SOLVING THE PROBLEMS

A control apparatus for a vehicle according to the present invention vehicle that solves the above-described problems is a control apparatus for a vehicle including a steering mechanism that steers rear wheels of the vehicle, and in-wheel motors that drive the rear wheels, the control apparatus including an operation state detection device that detects an operation state by a driver, a motion state detection device that detects a motion state of the vehicle, and a wheel control device that controls the steering mechanism and the in-wheel motors based on a signal detected by the operation state detection device and a signal detected by the motion state detection device.

In addition, a control method for a vehicle according to the present invention that solves the above-described problems is a control method for a vehicle including a steering mechanism that steers rear wheels of the vehicle, and in-wheel motors that drive the rear wheels, the control method including an operation state detection step of detecting an operation state of a driver, a motion state detection step of detecting a motion state of the vehicle, and a control setting value calculation step of calculating setting values for controlling the steering mechanism and the in-wheel motors based on a signal detected in the operation state detection step and a signal detected in the motion state detection step.

### EFFECTS Of THE INVENTION

With the control apparatus and the control method for a vehicle according to the present invention, the steering angle of rear wheels and the driving torque of the rear wheels can be appropriately determined based on the motion state of a vehicle and the operation state of a driver, and the yaw rate and the crosswise acceleration that are generated in the vehicle can be independently controlled. Therefore, with the control apparatus and the control method for a vehicle according to the present invention, it is possible to perform suitable vehicle control that does not cause discomfort to the driver. In addition, since the steering angle of the rear wheels and the ratio of the driving torque of the rear wheels for generating a target yaw rate can be appropriately determined according to the battery residual capacity, even when the battery residual capacity is low, it is possible to minimize influence on the cruising range, and to perform suitable vehicle control that does not cause discomfort to the driver.

### BRIEF DESCRIPTION Of THE DRAWINGS

[FIG. 1] FIG. 1 is a schematic diagram of a vehicle including a control apparatus for a vehicle according to an embodiment of the present invention.
[FIG. 2] FIG. 2 is a graph illustrating an example of a travelling mode table in a normal driving mode according to the embodiment of the present invention.
[FIG. 3] FIG. 3 is a flowchart illustrating an example of control of the driving torque of rear wheels and the steering angle of the rear wheel according to a first embodiment of the present invention.
[FIG. 4] FIG. 4 is a flowchart illustrating an example of control of a control setting value calculation step according to the first embodiment of the present invention.
[FIG. 5] FIG. 5 is a flowchart illustrating an example of control of an in-phase torque vectoring control step according to the first embodiment of the present invention.
[FIG. 6] FIG. 6 is a graph illustrating an example of target yaw rate setting according to the first embodiment of the present invention.
[FIG. 7] FIG. 7 is a graph illustrating an example of target crosswise acceleration setting according to the first embodiment of the present invention.
[FIG. 8] FIG. 8 is an explanatory diagram illustrating one example regarding control setting of the steering angle of the rear wheels and the driving torque of the rear wheels in the normal driving mode of the present invention.
[FIG. 9] FIG. 9 is an explanatory diagram illustrating an example of control of the steering angle of the rear wheels and the driving torque of the rear wheels in a diagonal traveling mode of the present invention.
[FIG. 10] FIG. 10 is a flowchart illustrating an example of control of the driving torque of the rear wheels and the steering angle of the rear wheels according to a second embodiment of the present invention.
[FIG. 11] FIG. 11 is a flowchart illustrating an example of control of the control setting value calculation step according to the second embodiment of the present invention.
[FIG. 12] FIG. 12 is a flowchart illustrating an example of control of the in-phase torque vectoring control step according to the second embodiment of the present invention.
[FIG. 13] FIG. 13 is a graph illustrating an example of the relationship between a battery residual capacity and a yaw rate generating device according to the second embodiment of the present invention.

### MODE FOR CARRYING OUT THE INVENTION

Hereinafter, a description will be given of embodiments of a control apparatus and a control method for a vehicle according to the present invention with reference to the drawings. It should be noted that the following embodiments do not limit the invention according to each claim, and not all the combinations of features described in the embodiments are necessarily essential to the solutions of the invention.

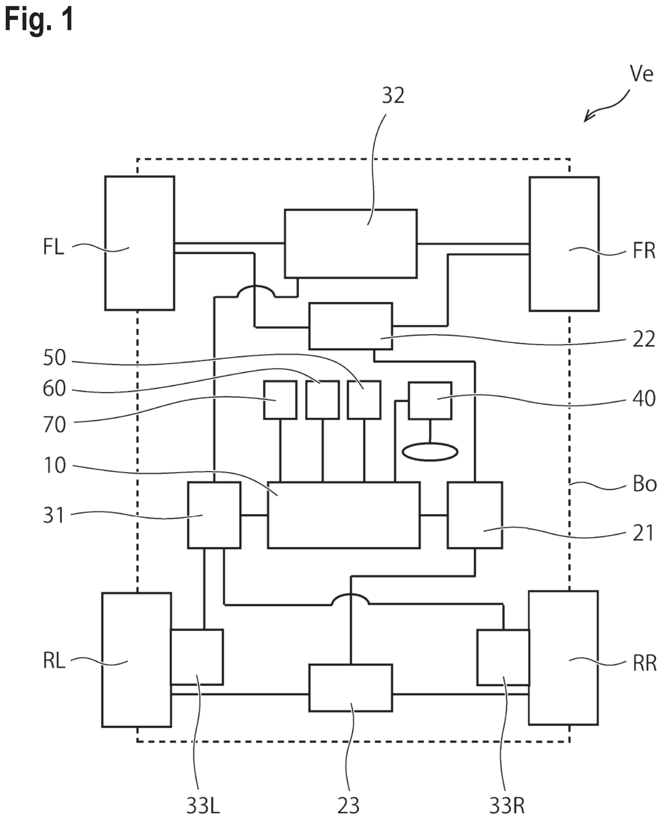

FIG. 1 is a schematic diagram of a vehicle including a control apparatus for a vehicle according to an embodiment of the present invention.

As illustrated in FIG. 1, a vehicle Ve including a control apparatus according to the present embodiment includes a front left wheel FL, a front right wheel FR, a rear left wheel RL, and a rear right wheel RR. In addition, the front left wheel FL, the front right wheel FR, the rear left wheel RL, and the rear right wheel RR are supported by a vehicle body Bo via a suspension mechanism, which is not illustrated.

The weight of the left front wheel FL, the right front wheel FR, the rear left wheel RL, and the rear right wheel RR, as well as parts attached to each of these wheels, which will be described later, is located below the suspension mechanism, and constitutes an unsprung weight. In addition, the weight of the vehicle body Bo and parts mounted on the vehicle body Bo, which will be described later, is arranged above the suspension mechanism, and constitutes a sprung weight.

The front left wheel FL and the front right wheel FR are coupled to an on-board motor 32 mounted on the vehicle body Bo so as to enable power transmission.

In-wheel motors 33L and 33R are attached inside wheels of the rear left wheel RL and the rear right wheel RR, respectively. The rear left wheel RL and the rear right wheel RR are coupled to the in-wheel motors 33L and 33R so as to enable power transmission.

In this manner, the on-board motor 32 that drives the front wheels and the in-wheel motors 33L and 33R that drive the rear wheels are combined and mounted on the vehicle Ve including the control device according to the present embodiment. By mounting the on-board motor 32 for driving the front wheels, the unsprung load can be reduced compared with the case where in-wheel motors are attached to the front wheels, it is possible to prevent deterioration in the road surface tracking ability of the steered wheels of the vehicle Ve. In addition, by mounting the in-wheel motors 33L and 33R for driving the rear wheels, it becomes possible to expand a luggage compartment and an interior space at the rear of the vehicle Ve, and to improve livability.

The rotation of each of the in-wheel motors 33L and 33R can be independently controlled. Accordingly, it is possible to independently control the driving torque generated in each of the rear left wheel RL and the rear right wheel RR.

The on-board motor 32 and the in-wheel motors 33L and 33R are supplied with power from a power storage device, which is not illustrated, via a driving force control device 31 mounted on the vehicle body Bo, and convert electrical energy into rotational energy.

The driving force control device 31 includes a microprocessor, which is a control device, and is actuated by power supplied from the power storage device, which is not illustrated. The driving force control device 31 performs control of the on-board motor 32 and the in-wheel motors 33L and 33R based on a setting value calculated by a wheel control device 10, which will be described later. In addition, the on-board motor 32 and the in-wheel motors 33L and 33R can also perform regeneration control by utilizing the rotational energy of the front left wheel FL, the front right wheel FR, the rear left wheel RL, and the rear right wheel RR. The rotational energy of each wheel is converted into the electrical energy by the on-board motor 32 and the in-wheel motors 33L and 33R, and the electric power generated at this time is stored in the power storage device via the driving force control device 31.

In the present embodiment, the on-board motor 32, the in-wheel motors 33L and 33R, and the driving force control device 31 constitute a power generation mechanism.

The front left wheel FL and the front right wheel FR are steerably coupled to a front-wheel steering actuator 22 mounted on the vehicle body Bo.

The front-wheel steering actuator 22 is supplied with power from the power storage device, which is not illustrated, and changes the rudder angle of the front left wheel FL and the front right wheel FR based on a command value that is output from a steering control device 21 mounted on the vehicle body Bo.

The rear left wheel RL and the rear right wheel RR are steerably coupled to a rear-wheel steering actuator 23 mounted on the vehicle body Bo.

The rear-wheel steering actuator 23 is supplied with power from the power storage device, which is not illustrated, and changes the rudder angle of the rear left wheel RL and the rear right wheel RR based on the command value that is output from the steering control device 21.

The steering control device 21 includes a microprocessor, which is a control device, and is actuated by power supplied from the power storage device, which is not illustrated. The steering control device 21 performs control of the front-wheel steering actuator 22 and the rear-wheel steering actuator 23 based on the setting value calculated by the wheel control device 10, which will be described later.

In the present embodiment, the front-wheel steering actuator 22, the rear-wheel steering actuator 23, and the steering control device 21 constitute a steering mechanism. The steering mechanism has a so-called steer-by-wire mechanism that performs control the rudder angle of each wheel with an electric signal. It should be noted that the control method of front-wheel steering is not limited to steer-by-wire, and a configuration may be used in which the front-wheel steering actuator 22 is mechanically connected to a steering wheel steered by a driver. In this case, the steering control device 21 controls only the rear-wheel steering actuator 23.

As illustrated in FIG. 1, an operation state detection device 40 that detects the operation state of the driver is mounted on the vehicle body Bo. The operation state detection device 40 includes, for example, a steering wheel angle sensor that detects the steering angle of the driver with respect to the steering wheel, a stroke sensor that detects the amount of pressure the driver puts on an accelerator pedal, and the like. A signal detected by the operation state detection device 40 is input to the wheel control device 10, which will be described later.

In addition, as illustrated in FIG. 1, a motion state detection device 50 that detects the motion state of the traveling vehicle Ve is mounted on the vehicle body Bo. The motion state detection device 50 includes, for example, a speed sensor that detects the vehicle speed of the vehicle Ve, a yaw rate sensor that detects the yaw rate generated in the vehicle body Bo, an acceleration sensor that detects the crosswise acceleration in a left-right direction of the vehicle body Bo, and the like. A signal detected by the motion state detection device 50 is input to the wheel control device 10, which will be described later.

In addition, as illustrated in FIG. 1, a power supply state detection device 60 that detects the battery residual capacity of the power storage device is mounted on the vehicle body Bo. The power supply state detection device 60 can detect the battery residual capacity by, for example, a well-known method such as a voltage sensor. The battery residual capacity detected by the power supply state detection device 60 is input to the wheel control device 10, which will be described later.

In addition, as illustrated in FIG. 1, a changeover switch 70 that performs switching of a traveling mode, which will be described later, is mounted on the vehicle body Bo. The changeover switch 70 outputs a signal for switching the traveling mode according to the operation by the driver, and the output signal is input to the wheel control device 10, which will be described later. It should be noted that, in the present embodiment, the changeover switch 70 is not limited to one directly operated by the driver, and a configuration may be used in which the traveling mode is automatically switched according to the motion state of the vehicle Ve. With the configuration in which the traveling mode can be automatically changed in this manner, even in a case where, for example, the vehicle Ve is controlled by automated driving, appropriate switching of the traveling mode is performed according to the motion state of the vehicle Ve.

The wheel control device 10 includes a microprocessor, which is a control device, and is actuated by power supplied from the power storage device, which is not illustrated. The signals detected by the operation state detection device 40, the motion state detection device 50, and the power supply state detection device 60 are input to the wheel control device 10. In addition, the wheel control device 10 calculates a setting value for controlling traveling of the vehicle Ve in accordance with these input signals and the traveling mode of the vehicle Ve designated by the changeover switch 70. The setting value calculated by the wheel control device 10 is output to the driving force control device 31 and the steering control device 21.

Specifically, the wheel control device 10 derives a setting value of the driving torque of each wheel required according to the traveling mode, and outputs the calculated setting value to the driving force control device 31. In addition, the wheel control device 10 derives a setting value of the steering angle of each wheel required according to the traveling mode, and outputs the calculated setting value to the steering control device 21.

In the present embodiment, the vehicle Ve has two traveling modes, i.e., the normal driving mode and the diagonal traveling mode. In the normal driving mode, the steering direction of the rear wheels can be changed according to the vehicle speed of the vehicle Ve at the time of turning, and torque vectoring can be simultaneously performed. In addition, in the diagonal traveling mode, regardless of the vehicle speed of the vehicle Ve, the steering direction of the rear wheels can be made to be in phase with the steering direction of the front wheels, and it is possible to perform diagonal traveling in which the vehicle Ve travels straight in a state where a front-rear direction of the vehicle does not match the traveling direction.

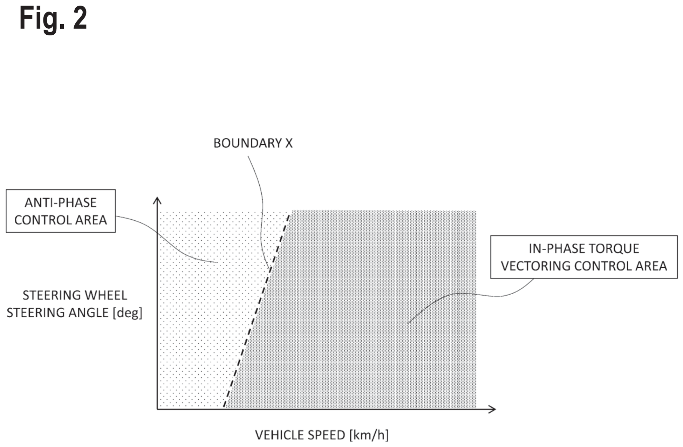

FIG. 2 is a graph illustrating an example of a travelling mode table in the normal driving mode according to the embodiment of the present invention. The travelling mode table of the present invention includes, as an example, two traveling mode areas, i.e., an anti-phase control area and an in-phase torque vectoring control area.

In the normal driving mode, when the travel speed of the vehicle Ve is a low speed, as illustrated in FIG. 2, control in the anti-phase control area is performed. In the anti-phase control area, the steering control device 21 is controlled so that the steering direction of the rear wheels is in anti-phase with the steering direction of the front wheels (hereinafter referred to as the anti-phase control). When the vehicle Ve is controlled in the anti-phase control area as described above, since the minimum turning radius at the time of turning can be reduced, it is possible to improve maneuverability.

In addition, in the normal driving mode, when the travel speed of the vehicle Ve is medium to high speed, as illustrated in Fig. 2, control in the in-phase torque vectoring control area is performed. In the in-phase torque vectoring control area, the steering control device 21 is controlled so that the steering direction of the rear wheels becomes in phase with the steering direction of the front wheels, and the driving force control device 31 is simultaneously controlled so that torque vectoring is performed by the driving torque difference between the rear left wheel RL and the rear right wheel RR (hereinafter referred to as the in-phase torque vectoring control). When the vehicle Ve is controlled in the in-phase torque vectoring control area as described above, the yaw rate generated in the vehicle Ve at the time of turning can be independently controlled by torque vectoring, and the crosswise acceleration can be independently controlled by the steering angle of the front and rear wheels. Therefore, even when driving on a high-speed ramp, changing lanes, or performing an emergency avoidance, the responsiveness and stability of vehicle motion are improved, and it is possible to realize driving that reduces discomfort to the driver.

In addition, when the traveling mode is the diagonal traveling mode, control in the in-phase control area is performed within a preset range of the traveling speed of the vehicle Ve. In the in-phase control area, the steering control device 21 is controlled so that the steering direction of the rear wheels becomes in phase with the steering direction of the front wheels (hereinafter referred to as the in-phase control). When the vehicle Ve is controlled in the diagonal traveling mode as described above, it is possible to perform traveling suitable for passing through vehicles at low speed and parallel parking.

Next, a description will be given of a control method of the driving torque of the rear left wheel RL and the rear right wheel RR as well as the steering angle of the rear left wheel RL and the rear right wheel RR according to the present embodiment based on the following examples.

### [First Embodiment]

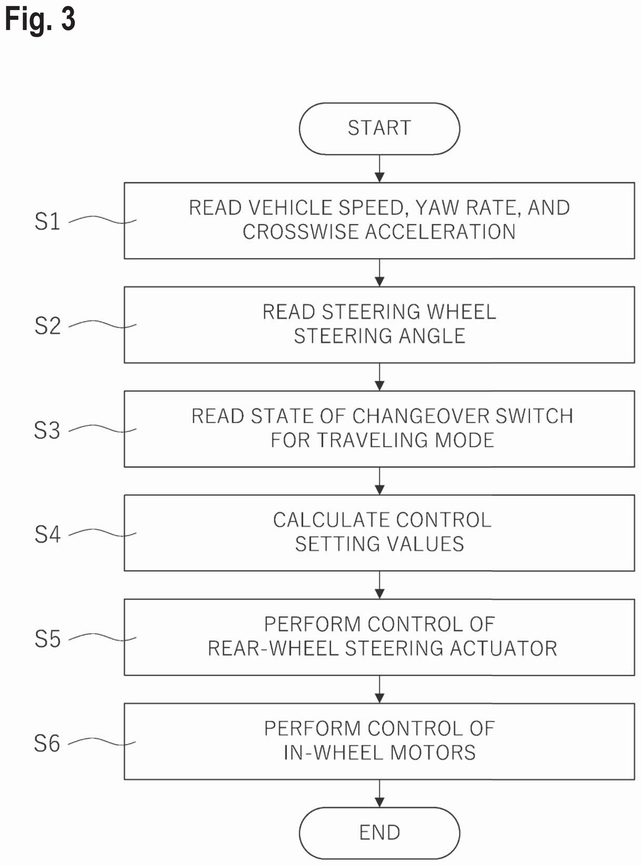

FIG. 3 is a flowchart illustrating an example of control of the driving torque of the rear wheels and the steering angle of the rear wheel according to a first embodiment.

In step S1, the vehicle speed of the vehicle Ve, and the yaw rate and crosswise acceleration of the vehicle body Bo are detected by the motion state detection device 50. In the present embodiment, the step in step S1 is defined as a motion state detection step.

In step S2, the steering angle of the steering wheel of the driver, and the amount of pressure on the accelerator pedal are detected by the operation state detection device 40. In the present embodiment, the step in step S2 is defined as an operation state detection step.

In step S3, it is detected whether the switching state of the traveling mode by the changeover switch 70 is the normal driving mode or the diagonal traveling mode. In the present embodiment, the step in step S3 is defined as a traveling mode detection step.

Signals detected in respective steps S1, S2, and S3 are input to the wheel control device 10, and a transition is made to step S4.

In step S4, calculation is performed in the wheel control device 10 for setting values of the steering direction and steering angle of the rear left wheel RL and the rear right wheel RR as well as the driving torque of the rear left wheel RL and the rear right wheel RR, based on the vehicle speed of the vehicle Ve and the steering angle of the steering wheel that were detected in the above-described steps. In the present embodiment, the step in step S4 is defined as a control setting value calculation step.

Next, the control setting value calculation step according to the first embodiment will be described.

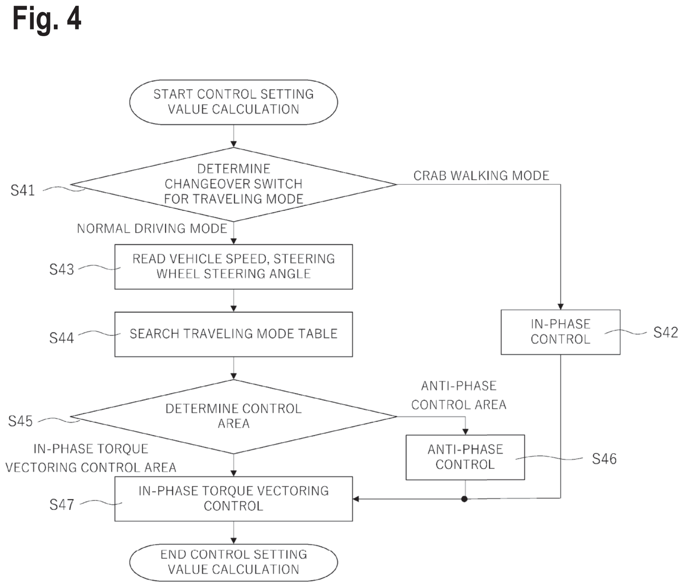

FIG. 4 is a flowchart illustrating an example of control of the control setting value calculation step according to the first embodiment.

In step S41, the switching state of the changeover switch 70 detected in the traveling mode detection step is determined. When it is determined that the traveling mode is the diagonal traveling mode in the traveling mode detection step, a transition is made to step S42, and when it is determined that the traveling mode is the normal driving mode, a transition is made to step S43. It should be noted that in consideration of an erroneous operation of the changeover switch 70 by the driver, when a preset vehicle speed is exceeded, the driving mode may be preferentially set to the normal driving mode.

In step S42, calculation for performing the in-phase control of the steering of the rear left wheel RL and the rear right wheel RR is performed. In step S42, the steering angle of the rear left wheel LR and the rear right wheel RR is calculated according to the steering angle of the steering wheel detected in the operation state detection step.

The setting value for the steering angle of the rear left wheel LR and the rear right wheel RR calculated in step S42 is output from the wheel control device 10 to the steering control device 21 in step S5, which will be described later.

In step S43, reading of the vehicle speed of the vehicle Ve detected in the motion state detection step and the steering angle of the steering wheel detected in the operation state detection step is performed.

In step S44, the motion state of the vehicle Ve is identified from the vehicle speed and the steering angle of the steering wheel of the vehicle Ve that are read in step S43, and a search is performed to determine which position of the areas on the travelling mode table illustrated in FIG. 2 corresponds to the state of the vehicle Ve.

In the anti-phase control area, when the vehicle speed corresponding to the steering angle of the steering wheel is a certain value (a boundary X in FIG. 2) or less, the anti-phase control is performed for the steering of the rear left wheel LR and the rear right wheel RR.

In the in-phase torque vectoring control area, when the vehicle speed corresponding to the steering angle of the steering wheel is the certain value (the boundary X in FIG. 2) or more, the in-phase torque vectoring control is performed for the steering of the rear left wheel LR and the rear right wheel RR.

It should be noted that the boundary X dividing the anti-phase control area and the in-phase torque vectoring control area represents the relationship between the vehicle speed and the steering angle of the steering wheel, and is preferably appropriately adjusted for each vehicle. In addition, a plurality of types of travelling mode tables may be saved in the wheel control device 10 by which step S44 is performed, and the type of driving mode table may be appropriately selected depending on the road surface conditions during traveling and the driver's intentions.

In step S45, a step to which a transition is to be made next is selected based on the traveling mode area of the vehicle Ve searched in step S44. When it is determined that the traveling mode of the vehicle Ve corresponds to the anti-phase control area, a transition to step S46 is made. In addition, when it is determined that the traveling mode of the vehicle Ve corresponds to the in-phase torque vectoring control area, a transition is made to step S47.

In step S46, calculation for performing the anti-phase control for the steering of the rear left wheel LR and the rear right wheel RR is performed. In step S46, the steering angle of the rear left wheel LR and the rear right wheel RR is calculated according to the steering angle of the steering wheel detected in the operation state detection step.

The setting value for the steering angle of the rear left wheel LR and the rear right wheel RR calculated in step S46 is output from the wheel control device 10 to the steering control device 21 in step 5, which will be described later.

In step S47, calculation for performing the in-phase torque vectoring control is performed according to the vehicle speed and the steering angle of the steering wheel of the vehicle Ve. In step S47, the target values for the yaw rate and the crosswise acceleration that are generated in the vehicle Ve are set, and the driving torque difference between and the steering angle of the rear left wheel LR and the rear right wheel RR for realizing these target values are calculated. In the present embodiment, the step in step S47 is defined as an in-phase torque vectoring control step.

Next, the in-phase torque vectoring control step according to the first embodiment will be described.

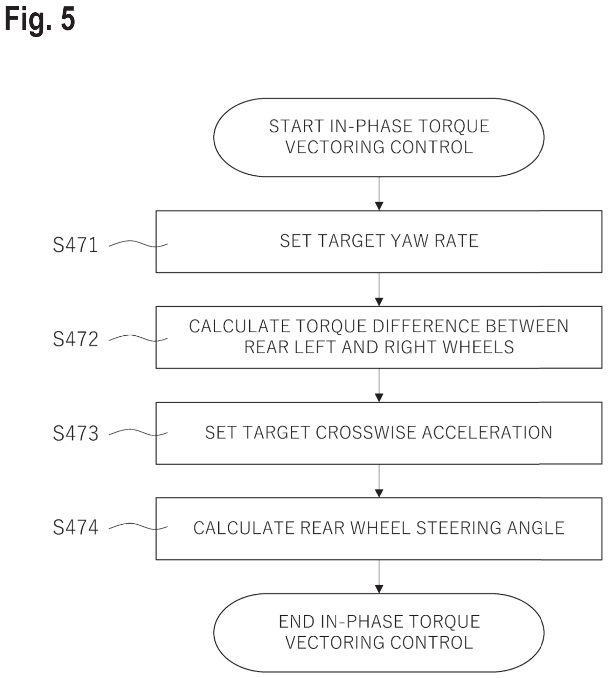

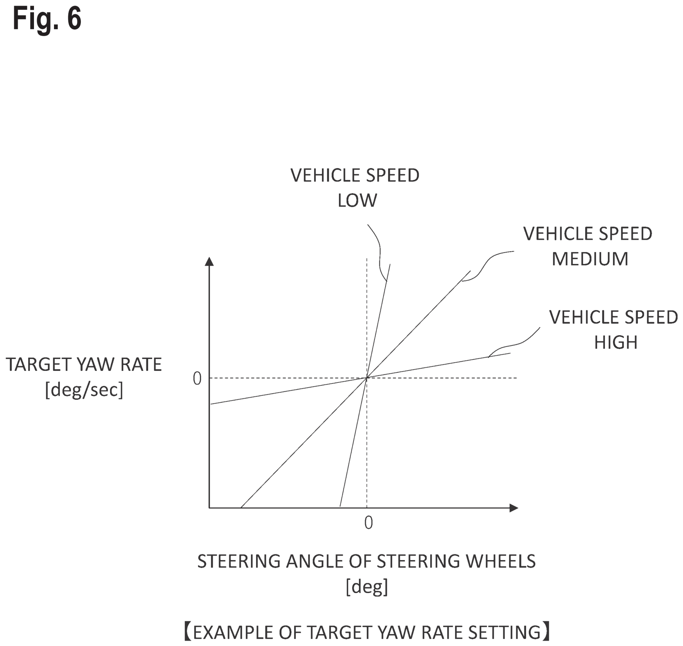

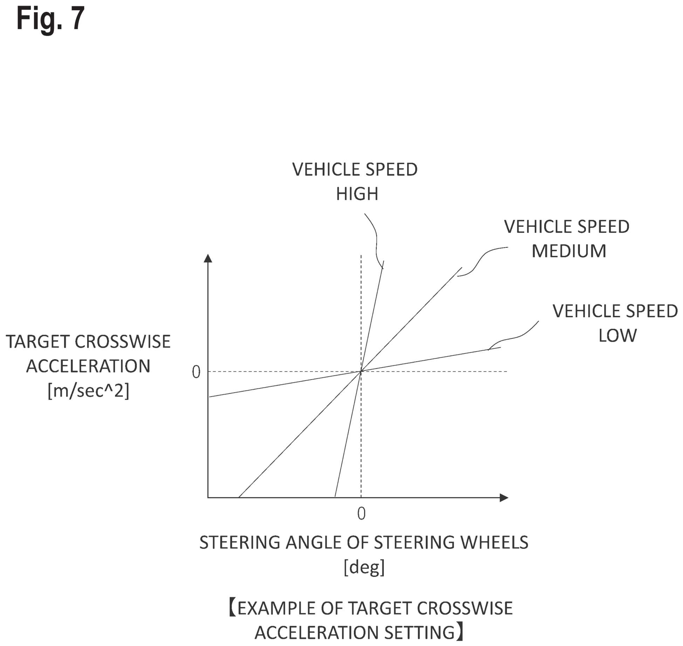

FIG. 5 is a flowchart illustrating an example of control of the in-phase torque vectoring control step according to the first embodiment of the present invention, FIG. 6 is a graph illustrating an example of target yaw rate setting according to the first embodiment of the present invention, and FIG. 7 is a graph illustrating an example of target crosswise acceleration setting according to the first embodiment of the present invention.

In step S471, a target yaw rate is set based on the vehicle speed of the vehicle Ve detected in the motion state detection step, and the value of the steering angle of the steering wheel detected in the operation state detection step. As an example, as illustrated in FIG. 6, when the vehicle speed of the vehicle Ve is high, the value of the target yaw rate can be set low with respect to the value of the steering angle of the steering wheel, and when the vehicle speed of the vehicle Ve is low, the value of the target yaw rate can be set high with respect to the value of the steering angle of the steering wheel.

In step S472, the driving torque difference between the rear left wheel LR and the rear right wheel RR is calculated so that the target yaw rate that is set in step S471 is generated.

In step S473, target crosswise acceleration is set based on the vehicle speed of the vehicle Ve detected in the motion state detection step, and the value of the steering angle of the steering wheel detected in the operation state detection step. As an example, as illustrated in FIG. 7, when the vehicle speed of the vehicle Ve is high, the value of the target crosswise acceleration can be set high with respect to the value of the steering angle of the steering wheel, and when the vehicle speed of the vehicle Ve is low, the value of the target crosswise acceleration can be set low with respect to the value of the steering angle of the steering wheel.

In step S474, the steering angle of the rear left wheel LR and the rear right wheel RR is calculated so as to achieve the target crosswise acceleration that was set in step S473.

The setting value for the driving torque difference between the rear left wheel LR and the rear right wheel RR calculated in step S472 is output from the wheel control device 10 to the driving force control device 31 in step S6, which will be described later. In addition, the setting value for the steering angle of the rear left wheel LR and the rear right wheel RR calculated in step S474 is output from the wheel control device 10 to the steering control device 21 in step S5, which will be described later.

In step S5 illustrated in FIG. 3, the setting value for the steering angle of the rear left wheel LR and the rear right wheel RR calculated in step S4 is input to the steering control device 21. In addition, the steering control device 21 outputs a command value to the front-wheel steering actuator 22 and the rear-wheel steering actuator 23 based on the input setting value, and actuates the front-wheel steering actuator 22 and the rear-wheel steering actuator 23. The front-wheel steering actuator 22 and the rear-wheel steering actuator 23 execute steering of the rear left wheel LR and the rear right wheel RR based on the input command value.

In step S6, the setting value for the driving torque of the rear left wheel LR and the rear right wheel RR calculated in step S4 is input to the driving force control device 31. In addition, the driving force control device 31 outputs a command value to the in-wheel motors 33L and 33R based on the input setting value, and actuates the in-wheel motors 33L and 33R.

Next, a description will be given of effects according to the first embodiment of the present invention by taking a specific example for the vehicle Ve controlled by the control method according to the first embodiment.

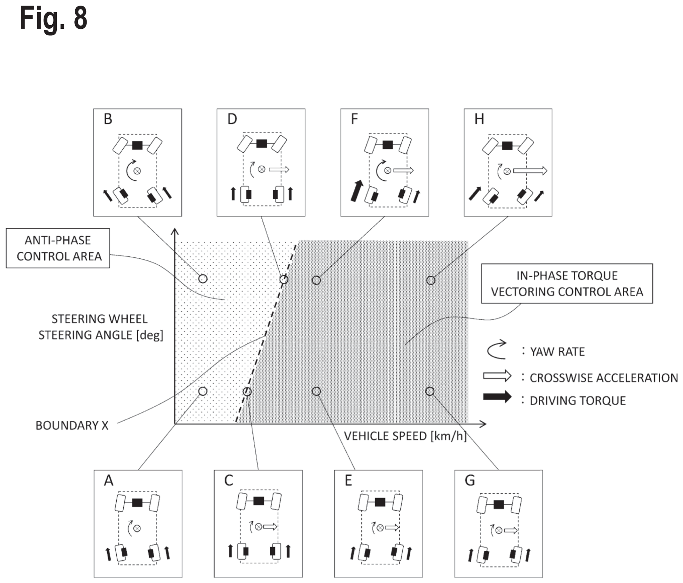

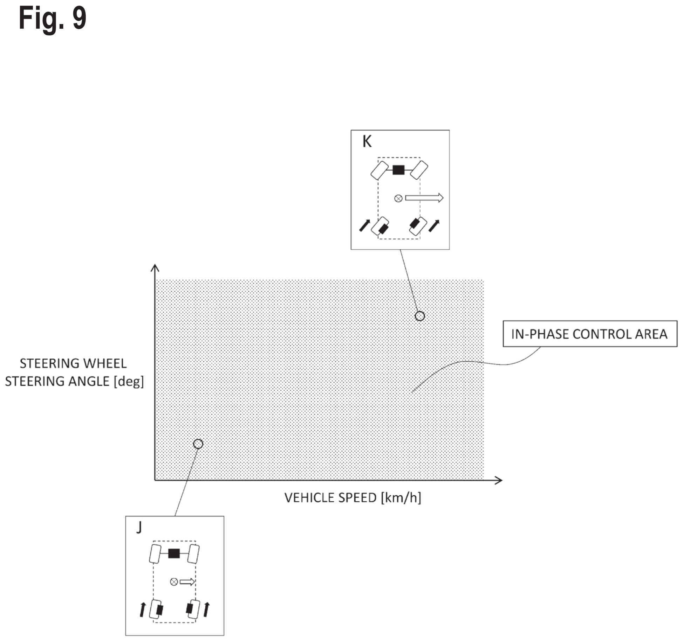

FIG. 8 is an explanatory diagram illustrating one example regarding control setting of the steering angle of the rear wheels and the driving torque of the rear wheels in the normal driving mode of the present invention, and FIG. 9 is an explanatory diagram illustrating an example of control of the steering angle of the rear wheels and the driving torque of the rear wheels in the diagonal traveling mode of the present invention. It should be noted that the figures illustrated within the frames of states A to K illustrated in FIG. 8 and FIG. 9 are schematic diagrams illustrating the motion states of the vehicle Ve, and it is assumed that the upper side of the paper is the front side of the vehicle Ve. In addition, it is assumed that arrows illustrated in the frames of the states A to K represent the yaw rate, the crosswise acceleration, and the driving torque as illustrated in FIG. 8, and the size and thickness of the arrows represent the magnitude of each value. In addition, the angle of the wheels of the vehicle Ve illustrated within the frames of the states A to K represent the steering angle of each wheel.

The state A illustrated in FIG. 8 illustrates an example of control of the steering angle of the rear wheels and the driving torque of the rear wheels in a case where the steering angle of the steering wheel is small in the anti-phase control area in the normal driving mode. In addition, the state B illustrates an example of control of the steering angle of the rear wheels and the driving torque of the rear wheels in a case where the steering angle of the steering wheel is large in the same control area as the state A.

As illustrated in the states A and B, in the anti-phase control area in the normal driving mode, the steering direction of the rear wheels is in anti-phase with the steering direction of the front wheels, and the steering angle of the rear left wheel LR and the rear right wheel RR is changed according to the steering angle of the steering wheel. At this time, the driving torque difference is not generated between the rear left wheel LR and the rear right wheel RR, and torque vectoring is not performed.

According to the control method of the vehicle Ve in the anti-phase control area in the normal driving mode as illustrated in the states A and B, since the minimum turning radius at the time of turning can be reduced, it is possible to improve maneuverability.

The state C of illustrated in FIG. 8 illustrates an example of control of the steering angle of the rear wheels and the driving torque of the rear wheels in a case where the steering angle of the steering wheel is small in the boundary X between the anti-phase control area and the in-phase torque vectoring control area in the normal driving mode. In addition, the state D illustrates an example of control of the steering angle of the rear wheels and the driving torque of the rear wheels in a case where the steering angle of the steering wheel is large in the same control area as the state C.

As illustrated in the states C and D, in the boundary between the anti-phase control area and the in-phase torque vectoring control area in the normal driving mode, steering of the rear left wheel LR and the rear right wheel RR is not performed, and the steering angle of the front left wheel FL and the front right wheel FR is changed according to the steering angle of the steering wheel. At this time, the driving torque difference is not generated between the rear left wheel LR and the rear right wheel RR, and torque vectoring is not performed, either.

The state E illustrated in FIG. 8 illustrates an example of control of the steering angle of the rear wheels and the driving torque of the rear wheels in a case where the vehicle speed of the vehicle Ve is medium to low speed and the steering angle of the steering wheel is small in the in-phase torque vectoring control area in the normal driving mode. In addition, the state F illustrates an example of control of the steering angle of the rear wheels and the driving torque of the rear wheels in a case where the steering angle of the steering wheel is large in the same control area and at the same vehicle speed as those in the state E.

As illustrated in the states E and F, in the in-phase torque vectoring control area in the normal driving mode, the steering direction of the rear wheels is in phase with the steering direction of the front wheels. In addition, as illustrated in the states E and F, when the vehicle speed of the vehicle Ve is medium to low speed, control is performed so that the amount of change in the steering angle of the rear left wheel LR and the rear right wheel RR with respect to the amount of change in the steering angle of the steering wheel becomes small. In addition, control is performed so that the amount of change in the driving torque difference between the rear left wheel LR and the rear right wheel RR with respect to the amount of change in the steering angle of the steering wheel becomes large, and torque vectoring is performed by this driving torque difference.

According to the control method of the vehicle Ve at the time of medium to low speed in the in-phase torque vectoring control area in the normal driving mode as illustrated in the states E and F, the amount of change in the yaw rate with respect to the amount of change in the steering angle of the steering wheel can be increased, and the amount of change in the crosswise acceleration can be reduced.

The state G illustrated in FIG. 8 illustrates an example of control of the steering angle of the rear wheels and the driving torque of the rear wheels in a case where the vehicle speed of the vehicle Ve is high and the steering angle of the steering wheel is small in the in-phase torque vectoring control area in the normal driving mode. In addition, the state H illustrates an example of control of the steering angle of the rear wheels and the driving torque of the rear wheels in a case where the steering angle of the steering wheel is large in the same control area and at the same vehicle speed as those in the state G.

As illustrated in the states G and H, in the in-phase torque vectoring control area in the normal driving mode, the steering direction of the rear wheels is in phase with the steering direction of the front wheels. In addition, as illustrated in the states G and H, when the vehicle speed of the vehicle Ve is high, control is performed so that the amount of change in the steering angle of the rear left wheel LR and the rear right wheel RR with respect to the amount of change in the steering angle of the steering wheel becomes larger than that in the case of medium to low speed. In addition, control is performed so that the amount of change in the driving torque difference between the rear left wheel LR and the rear right wheel RR with respect to the amount of change in the steering angle of the steering wheel is generated less than that in the case of medium to low speed, and torque vectoring is performed by this driving torque difference.

According to the control method of the vehicle Ve at high speed in the in-phase torque vectoring control area in the normal driving mode as illustrated in the states G and H, the amount of change in the yaw rate with respect to the amount of change in the steering angle of the steering wheel can be reduced, and the amount of change in the crosswise acceleration can be increased.

It should be noted that the control setting of the steering angle of the rear wheels and the driving torque of the rear wheels in the normal driving mode illustrated in FIG. 8 illustrates one of examples of the present invention, and the control setting of the steering angle of the rear wheels and the driving torque of the rear wheels is not limited to this. For example, as another one of the examples of the present invention, control setting of the steering angle of the rear wheels and the driving torque of the rear wheels may be performed so that only the yaw rate is changed, without changing the crosswise acceleration.

The state J illustrated in FIG. 9 illustrates an example of control of the steering angle of the rear wheels and the driving torque of the rear wheels in a case where the vehicle speed of the vehicle Ve is low and the steering angle of the steering wheel is small in the in-phase control area in the diagonal traveling mode. In addition, the state K illustrates an example of control of the steering angle of the rear wheels and the driving torque of the rear wheels in a case where the vehicle speed of the vehicle Ve is high and the steering angle of the steering wheel is large in the same control area as the state J.

As illustrated in the states J and K, in the in-phase control area in the diagonal traveling mode, the steering direction of the rear wheels is in phase with the steering direction of the front wheels, and the steering angle of the rear left wheel LR and the rear right wheel RR is changed according to the steering angle of the steering wheel. At this time, the driving torque difference is not generated between the rear left wheel LR and the rear right wheel RR, and torque vectoring is not performed.

According to the control method of the vehicle Ve in the in-phase control area in the diagonal traveling mode as illustrated in the states J and K, regardless of the vehicle speed of the vehicle Ve, the vehicle Ve can move laterally or diagonally without turning. Therefore, it is possible for the vehicle Ve to perform traveling suitable for passing through vehicles and parallel parking.

As described above, with the control method for a vehicle according to the first embodiment, it is possible to independently control the yaw rate and crosswise acceleration of the vehicle to be predetermined values by controlling each of the steering angle of the rear wheels and the driving torque of the in-wheel motors mounted on the rear wheels.

### [Second Embodiment]

In the first embodiment described above, a description has been given of the control method for a vehicle of appropriately determining the steering angle of the rear wheels and the driving torque of the rear wheels according to the motion state of the vehicle, the operation state of the driver, and selection of the traveling mode by the changeover switch. In a control method for a vehicle according to a second embodiment that will be described next, a control method different from the control method for a vehicle according to the first embodiment vehicle will be described.

An in-wheel motor generally consumes a large amount of power for driving. Therefore, when the battery residual capacity is not enough, in order to reduce the influence on the cruising range, there are cases where the power supplied to the in-wheel motor is restricted. When the output of the in-wheel motor is restricted as described above, since a sufficient driving torque difference between the right and left rear wheels cannot be generated, and a target yaw rate cannot be reached, when torque vectoring is performed by the in-wheel motor as in the control method for a vehicle according to the first embodiment, the motion performance of the vehicle may be affected.

The invention according to the second embodiment has been made to solve the above-described problem, and has an object of providing a control method for a vehicle that can control the steering angle of the rear wheels and the driving torque of the in-wheel motors mounted on the rear wheels based on the motion state of the vehicle and the operation state of the driver together with the battery residual capacity, and can perform preferable vehicle control that does not cause discomfort to the driver. It should be noted that steps that are the same as or similar to those in the above-described first embodiment are denoted by the same reference numerals, and a detailed description are omitted.

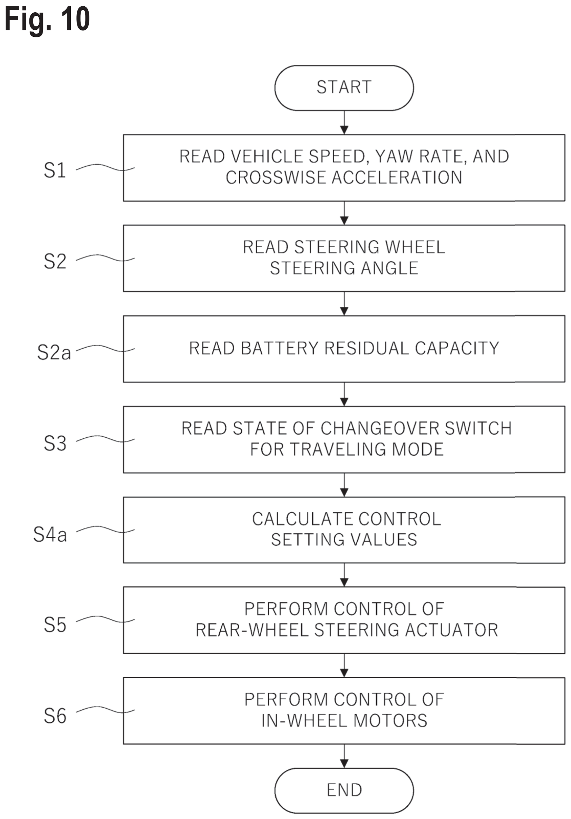

FIG. 10 is a flowchart illustrating an example of control of the driving torque of the rear wheels and the steering angle of the rear wheels according to the second embodiment of the present invention.

The steps in step S1 and step S2 are the same as those in the first embodiment.

In step S2a, the battery residual capacity of the power storage device is detected by the power supply state detection device 60. In the present embodiment, the step in step S2a is defined as a battery residual capacity detection step.

The step in step S3 is the same as that in the first embodiment.

Signal detected in each of steps S1 and S2, S2a, and S3 is input to the wheel control device 10, and a transition is made to step S4a.

In step S4a, calculation is performed in the wheel control device 10 for the setting values for the steering direction and steering angle of the rear left wheel RL and the rear right wheel RR as well as the driving torque of the rear left wheel RL and the rear right wheel RR, based on the vehicle speed of the vehicle Ve, the steering angle of the steering wheel, and the battery residual capacity detected in the above-described step. In the present embodiment, the step in step S4a is defined as the control setting value calculation step as in the step in step S4 in the first embodiment.

Next, the control setting value calculation step according to the second embodiment will be described.

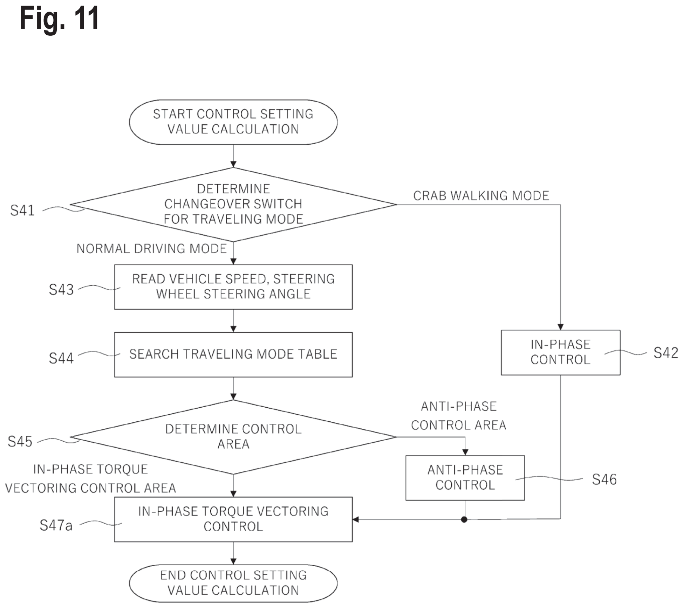

FIG. 11 is a flowchart illustrating an example of control of the control setting value calculation step according to the second embodiment of the present invention.

The steps in step S41 to step S46 are the same as those in the first embodiment.

In step S47a, calculation for performing the in-phase torque vectoring control according to the vehicle speed of the vehicle Ve and the steering angle of the steering wheel is performed. In step S47a, the target values for the yaw rate and the crosswise acceleration that are generated in the vehicle Ve are set, and the driving torque difference and steering angle of the rear left wheel LR and the rear right wheel RR for realizing these target values are set. In the present embodiment, the step in step S47a is defined as the in-phase torque vectoring control step as in step S47 in the first embodiment.

Next, the in-phase torque vectoring control step according to the second embodiment will be described.

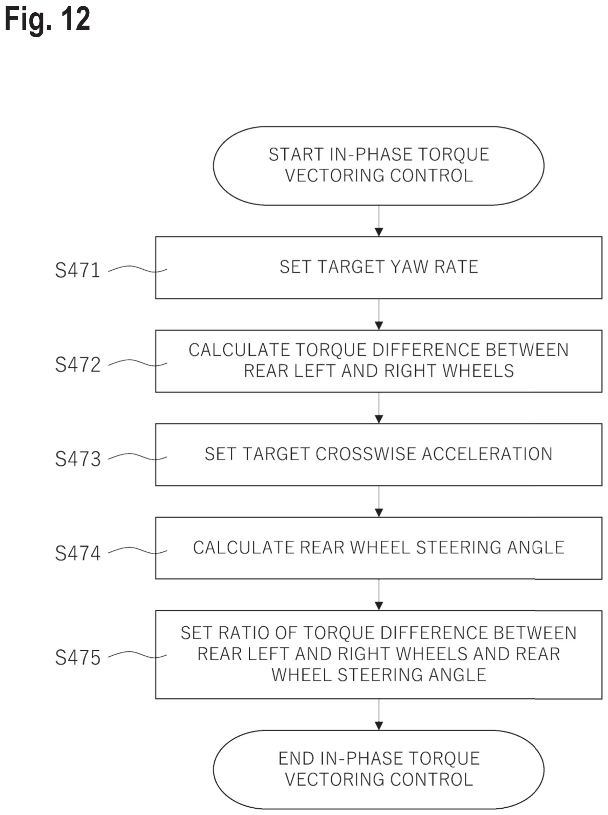

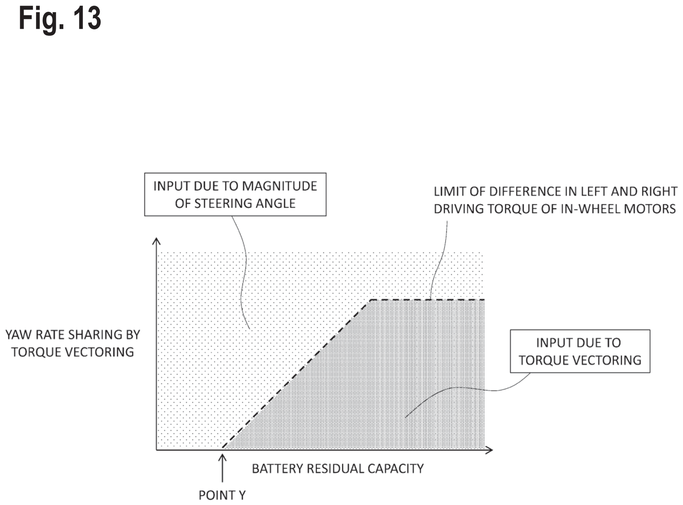

FIG. 12 is a flowchart illustrating an example of control of the in-phase torque vectoring control step according to the second embodiment of the present invention, and FIG. 13 is a graph illustrating an example of the relationship between the battery residual capacity and a yaw rate generating device according to the second embodiment of the present invention.

The steps in step S471 to step S474 are the same as those in the first embodiment.

In step S475, in order to generate the target yaw rate that was set in step S471 based on the battery residual capacity of the power storage device detected in step 2a, the ratio of the output of the driving torque difference between the rear left wheel LR and the rear right wheel RR calculated in step S472 and the steering angle of the rear left wheel LR and the rear right wheel RR calculated in step S474 is set.

Specifically, as illustrated in FIG. 13, when the battery residual capacity is a certain value (a point Y in FIG. 13) or more, the input due to torque vectoring caused by the driving torque difference between the left rear wheel LR and the right rear wheel RR and the input due to the magnitude of the steering angle of the left rear wheel LR and the right rear wheel RR are set to an arbitrary ratio, so as to generate a target yaw rate. As an example, as illustrated in FIG. 13, it is preferable to increase the ratio of the input due to the magnitude of the steering angle with respect to the input due to torque vectoring, as the battery residual capacity is decreased.

In addition, when the battery residual capacity is the certain value (the point Y in FIG. 13) or less, torque vectoring by the driving torque difference between the rear left wheel LR and the rear right wheel RR is not performed, and turning of the vehicle Ve is performed by the input due to the magnitude of the steering angle of the rear left wheel LR and the rear right wheel RR. In such a case, independent controlling of the yaw rate is restricted, and the yaw rate corresponding to the crosswise acceleration at the time of turning is generated in the vehicle Ve.

The setting values for the driving torque difference between the rear left wheel LR and the rear right wheel RR and the steering angle of the rear left wheel LR and the rear right wheel RR that were set in step S475 are output from the wheel control device 10 to the steering control device 21 in step S5, and from the wheel control device 10 to the driving force control device 31 in step S6.

The steps in step S5 to step S6 are the same as those in the first embodiment.

In this manner, according to the control method for a vehicle according to the second embodiment, it is possible to change the ratio of the input due to the steering angle of the rear wheels and the input due to torque vectoring of the rear wheels according to battery residual capacity, so that the yaw rate of the vehicle becomes a predetermined value. Therefore, even when the battery residual capacity is low, it is possible to minimize influence on the cruising range, and to realize traveling that reduces discomfort to the driver.

It should be noted that in the above-described embodiment, although the areas on the travelling mode table of the vehicle Ve are searched based on the vehicle speed of the vehicle Ve detected in the motion state detection step, and the steering angle of the steering wheel detected in the operation state detection step, and selection is performed to execute the anti-phase control or the in-phase torque vectoring control, a determination source for searching the area on the travelling mode table is not limited to this, and the amount of pressure on the accelerator pedal and the like detected in the motion state detection step may be used. It is clear from the language of the claims that modes with such changes or improvements may also be included in the technical scope of the present invention.

### REFERENCE SIGNS LIST

Ve vehicle, 10 wheel control device, 33L 33R in-wheel motor, 40 operation state detection device, 50 motion state detection device, 60 power supply state detection device, 70 changeover switch

## Claims

1. A control apparatus for a vehicle including a steering mechanism that steers rear wheels of the vehicle, and in-wheel motors that drive the rear wheels, the control apparatus comprising:
an operation state detection device that detects an operation state by a driver;
a motion state detection device that detects a motion state of the vehicle; and
a wheel control device that controls the steering mechanism and the in-wheel motors based on a signal detected by the operation state detection device and a signal detected by the motion state detection device.

2. The control apparatus for a vehicle according to claim 1,
wherein the wheel control device calculates a target yaw rate and a target crosswise acceleration to be generated in the vehicle.

3. The control apparatus for a vehicle according to claim 2,
wherein the wheel control device calculates a driving torque of the rear wheel corresponding to the target yaw rate, and a steering angle of the rear wheels corresponding to the target crosswise acceleration.

4. A control method for a vehicle including a steering mechanism that steers rear wheels of the vehicle, and in-wheel motors that drive the rear wheels, the control method comprising:
an operation state detection step of detecting an operation state of a driver;
a motion state detection step of detecting a motion state of the vehicle; and
a control setting value calculation step of calculating setting values for controlling the steering mechanism and the in-wheel motors based on a signal detected in the operation state detection step and a signal detected in the motion state detection step.

5. The control method for a vehicle according to claim 4,
wherein the control setting value calculation step includes a step of performing a search to determine which position in areas on a traveling mode table corresponds to a motion state of the vehicle, based on the signal detected in the operation state detection step and the signal detected in the motion state detection step.

6. The control method for a vehicle according to claim 5,
wherein the travelling mode table includes an anti-phase control area and an in-phase torque vectoring control area.

7. The control method for a vehicle according to claim 6,
wherein the control setting value calculation step includes a step of calculating a target yaw rate and a target crosswise acceleration to be generated in the vehicle.
